# EUROPEAN PATENT SPECIFICATION

(11) **EP 1 951 034 B1**
(45) Date of publication and mention of the grant of the patent: **23.09.2009**
(21) Application number: 06818461.3
(22) Date of filing: 10.11.2006
(51) Int. Cl.: A01K 1/00

(54) **A CUBICLE CONSTRUCTION**
LIEGEBOXKONSTRUKTION
CONSTRUCTION DE SÉPARATION DE STALLES

(30) Priority: 22.11.2005 NL 1030494; 19.05.2006 NL 1031839
(43) Date of publication of application: 06.08.2008
(73) Proprietor: Maasland N.V., 3147 PA Maassluis (NL)
(72) Inventor: FRANSEN, Renatus, Ignatius, Josephus, NL-3135 ZD Vlaardingen (NL); VAN LEEUWEN, Alexander, Adrianus, NL-2613 GW Delft (NL)
(74) Representative: Jennen, Peter Leonardus Hendricus
(86) International application number: PCT/EP2006/010786
(87) International publication number: WO 2007/059865

(56) References cited:
- DE-A- 192 254
- DE-A- 19 516 579
- DE-U- 29 702 098
- NL-C- 1 025 820

## Description

The present invention relates to a cubicle construction according to the preamble of claim 1, see e.g. document DE-U-29702098.

Another cubicle construction is known from European patent application EP-0447822-A2. This known device comprises a partition element extending in the longitudinal direction of the cubicle. This partition element is rotatable in the horizontal plane about a vertical support. The partition element is also movable in height about a horizontal axis. This prevents the animal from getting injured when rising from a lying position.

In practice, actions on an animal regularly need to be performed by a farmer or a veterinary surgeon in a cubicle. For this purpose, it is practical to remove the partition element. For removing the partition element, several elements have to be detached in the case of the known device.

The present invention aims at providing a cubicle construction that is capable of being disassembled in a simple manner.

This is achieved by means of the features of the characterizing part of claim 1. By means of one single element, i.e. the closing element, the coupling can be unlocked. The partition element portion with the partition element connected thereto is now detachable from the support by means of a simple movement. This can be done by one single person.

The partition element portion preferably comprises a stop for limiting the movement in height of the partition element. In this manner the movability in height of the partition element is limited, so that the animal is stimulated not to position itself under the partition element.

In a favourable embodiment, the closing element is movable about an axis perpendicular to the axis of rotation. This means that the closing element is connected to the cubicle construction and is still capable of being brought into a locking and an unlocking position.

In order to obtain a compact construction, the closing element comprises the stop.

It is advantageous if the coupling comprises a flexible bumper element that co-operates with the stop.

It is further advantageous if the support portion surrounds and clamps the flexible bumper element at least partially. The flexible bumper element is a wearing element that has to be replaced after some time has elapsed. In this manner it can be fastened with a minimum of components being used.

The support portion comprises a bracket for securing the support portion on the support, the bracket comprising the axis of rotation. This provides a compact construction with a minimum amount of components being used.

The partition element portion comprises a rotation space for surrounding the axis of rotation, which rotation space comprises an aperture at its lower side. In this manner the partition element portion can be lifted from the support portion by means of a simple movement.

In a further advantageous embodiment, the partition element portion is designed as a single forged or cast metal portion. This embodiment allows a simple production.

The support portion preferably comprises two upright portions for carrying the axis of rotation. This makes it possible to design the axis of rotation as a simple straight bolt that is carried by the two upright portions.

In a further particular embodiment, the closing element comprises a slotted hole and the slotted hole surrounds the closing element axis. In another particular embodiment, the closing element is shiftable along the closing element axis into a position in which rotation about the closing element axis is impeded or limited. In this manner the closing element is easily lockable in a particular position.

The invention will now be described by way of example with reference to an embodiment of a cubicle construction shown in the drawing, in which:
Figure 1 is a schematic plan view of a cubicle construction according to the invention comprising an animal place surrounded by partition elements;
Figure 2 shows a side view of a cubicle construction of Figure 1 in which an animal is lying, and
Figure 3 is a schematic perspective view of the coupling according to the invention, and
Figure 4 is a front view of a particular embodiment of the closing element.

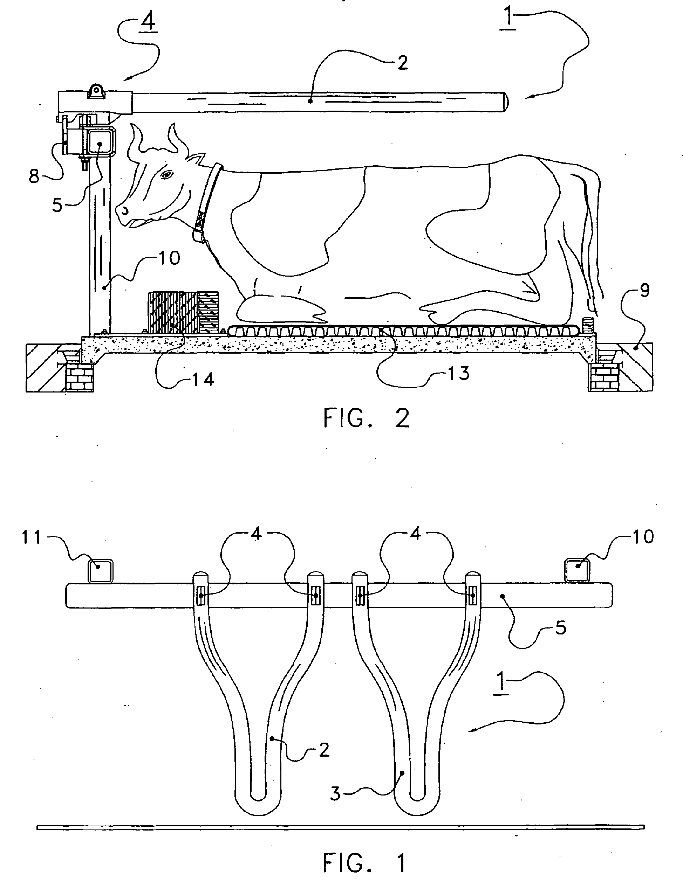

Figure 1 shows a cubicle construction 1 according to the invention for forming a partition of an animal place, comprising a partition element 2, 3 extending in the longitudinal direction of an animal place and a coupling 4 for fastening the partition element 2, 3 to a support 5, which coupling 4 comprises a support portion 6 for fastening to the support 5 and a partition element portion 7 for fastening to the partition element 2, 3, the partition element 2, 3 being movable in height by rotation about an axis of rotation, whereby the coupling 4 comprises a closing element 8 for making the partition element portion 7 detachable from the support portion 6 by means of a movement of the partition element portion 7 perpendicular to the axis of rotation. The partition element portion 7 comprises a stop for limiting the movement in height of the partition element 2, 3. The animal place is located between two partition elements 2, 3. The partition element. 2, 3 is described in detail in document EP-A-1579760.

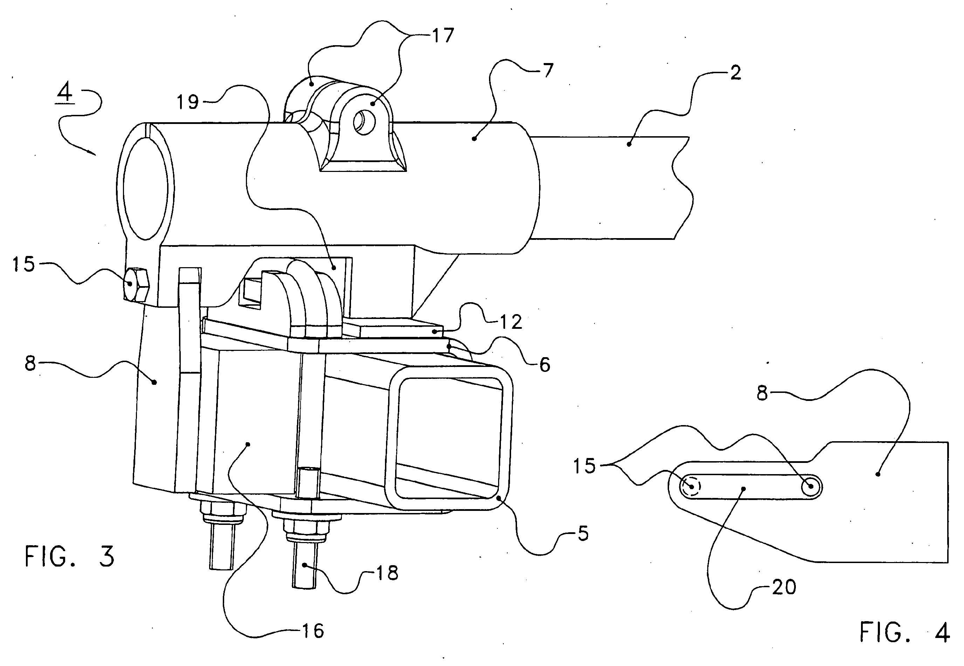

Figure 2 is a side view of a cubicle construction 1 of Figure 1, in which an animal is lying. At the rear side of the animal there is located a walking passage 9 designed as a grid floor. The partition elements 2, 3 are fastened to a support 5 designed as a horizontal box girder supporting several partition elements 2, 3. Two posts 10, 11 carry the box girder 5. The partition elements 2, 3 are shown in the inoperative position, i.e. in a position in which they are orientated horizontally and rest on a support stop 12 (Figure 3). The animal place further comprises a mattress 13 and a knee barrier 14 for limiting the passage of the animal in the longitudinal direction of the cubicle.

Figure 3 is a more detailed view of the coupling 4. Here, the closing element 8 is rotatably disposed about a closing element axis 15 perpendicular to the axis of rotation. The closing element axis 15 is designed as a simple bolt. The closing element 8 also comprises the stop. The coupling 4 further comprises a flexible bumper element 16 that co-operates with the stop, the support portion 6 surrounding and clamping the flexible bumper element 16 at least partially. The partition element portion 7 can be clamped on the end of the partition element 2 by means of two eyes 17 disposed on the upper side of the partition element portion 7 and a non-shown bolt. The support portion 6 comprises a bracket 18 for securing the support portion 6 on the support 5, the bracket 18 comprising the axis of rotation. The partition element portion 7 comprises a rotation space 19 for surrounding the axis of rotation, which rotation space 19 comprises an aperture at its lower side. As shown, the partition element portion 7 is designed as a single forged or cast metal portion.

In a non-shown embodiment, the partition element portion 7 consists of two separate metal halves that are clamped together by means of bolts. In the latter embodiment, the closing element axis 15 is constituted by a small bar that is clamped in the recesses between the two halves.

When disposed in a cubicle construction 1, the partition element with the partition element portion 7 connected thereto is capable of rotating in vertical direction about the axis of rotation until the closing element 8 presses against the flexible bumper element 16. This makes it possible for an animal that wishes to rise from a lying position to get up without being hampered too much.

In order to uncouple the partition element 2, 3 from the support 5, the following procedure is followed: first the closing element 8 is rotated about the closing element axis 15, so that the coupling 4 is unlocked. When the two couplings 4 of a partition element 2, 3 have been unlocked, the partition element 2, 3 is moved perpendicular to the axis of rotation in the direction of the walking passage 9 until the portion of the bracket 18 that forms the axis of rotation is located over the aperture of the rotation space 19. The entire partition element 2, 3 including the partition element portion 7 can now be lifted in a simple manner from the support portion 6.

Figure 4 shows a particular embodiment of the closing element 8. This embodiment comprises a slotted hole 20 that surrounds the closing element axis 15. The closing element 8 is shiftable along the closing element axis 15 into a position in which rotation about the closing element axis 15 is impeded or limited. For this purpose, there is made a recess at one side. In its locked position, the closing element 8 points downwards and the closing element axis 15 is in the position as indicated by the cross-section in the form of an interrupted line. When unlocking the coupling 4, the closing element 8 is rotated 90 degrees and subsequently shifted, after which the closing element axis 15 is located in the position as indicated in Figure 4 by the cross-section in the form of an uninterrupted line. In this position, the flattened upper side of the closing element 8 forms a stop against the partition element portion 7, so that it is no longer possible for the closing element 8 to rotate about the closing element axis 15.

## Claims

1. A cubicle construction for forming a partition of an animal place, comprising a partition element (2, 3) extending in the longitudinal direction of an animal place and a coupling (4) for fastening the partition element (2, 3) to a support (5), which coupling (4) comprises a support portion (6) for fastening to the support (5) and a partition element portion (7) for fastening to the partition element (2, 3) and the partition element (2, 3) being movable in height by rotation around an axis of rotation, wherein the coupling (4) comprises a closing element (8) for making the partition element portion (7) detachable from the support portion (6) via a movement of the partition element portion (7) perpendicular to the axis of rotation, **characterized in that** the support portion (6) comprises a bracket (18) for securing the support portion (6) on the support (5), the bracket (18) comprising the axis of rotation, and **in that** the partition element portion (7) comprises a rotation space (19) for surrounding the axis of rotation, which rotation space (19) comprises an aperture at its lower side..

2. A cubicle construction (1) as claimed in claim 1, **characterized in that** the partition element portion (7) comprises a stop for limiting the movement in height of the partition element (2, 3).

3. A cubicle construction (1) as claimed in claim 1 or 2, **characterized in that** the closing element (8) is movable about a closing element axis (15) perpendicular to the axis of rotation.

4. A cubicle construction (1) as claimed in claim 2 or 3 when dependent on claim 2, **characterized in that** the closing element (8) comprises the stop.

5. A cubicle construction (1) as claimed in claim 4, **characterized in that** the coupling (4) comprises a flexible bumper element (16) that co-operates with the stop.

6. A cubicle construction (1) as claimed in claim 5, **characterized in that** the support portion (6) surrounds and clamps the flexible bumper element (16) at least partially.

7. A cubicle construction (1) as claimed in any one of the preceding claims, **characterized in that** the partition element portion (7) is designed as a single forged or cast metal portion.

8. A cubicle construction (1) as claimed in any one of the preceding claim 3 to 6 or 7 when dependent on angone of claims 3 to 6, **characterized in that** the closing element (8) comprises a slotted hole (20), which slotted hole (20) surrounds the closing element axis (15).

9. A cubicle construction (1) as claimed in claim 8, **characterized in that** the closing element (8) is shiftable along the closing element axis (15) into a position in which rotation about the closing element axis (15) is impeded or limited.

## Patentansprüche

1. Boxkonstruktion zum Ausbilden einer Abteilung eines Tierplatzes, umfassend ein Trennelement (2, 3), welches sich in der Längsrichtung eines Tierplatzes erstreckt, und einer Verbindung (4) zum Befestigen des Trennelements (2, 3) an einem Träger (5), wobei die Verbindung (4) einen Tragabschnitt (6) zum Befestigen an dem Träger (5) und einen Trennelementabschnitt (7) zum Befestigen am Trennelement (2, 3) umfasst, und wobei das Trennelement (2, 3) in der Höhe durch Drehung um eine Rotationsachse bewegbar ist, wobei die Verbindung (4) ein Verschlusselement (8) umfasst, um den Trennelementabschnitt (7) abnehmbar vom Tragabschnitt (6) mittels einer Bewegung des Trennelementabschnitts (7) senkrecht zur Rotationsachse zu machen,
**dadurch gekennzeichnet, dass** der Tragabschnitt (6) eine Klammer (18) zum Befestigen des Tragabschnitts (6) auf dem Träger (5) umfasst, wobei die Klammer (18) die Rotationsachse umgreift, und dass das Trennelement (7) einen Rotationsraum (19) zum Umgeben der Rotationsachse aufweist, wobei der Rotationsraum (19) eine Öffnung an seiner unteren Seite besitzt.

2. Boxkonstruktion (1) nach Anspruch 1,
**dadurch gekennzeichnet, dass** das Trennelement (7) einen Anschlag zum Begrenzen der Höhenbewegung des Trennelements (2, 3) umfasst.

3. Boxkonstruktion (1) nach Anspruch 1 oder 2,
**dadurch gekennzeichnet, dass** das Verschlusselement (8) über eine Verschlusselementachse (15) senkrecht zur Rotationsachse bewegbar ist.

4. Boxkonstruktion (1) nach Anspruch 2 oder 3, wenn abhängig von Anspruch 2,
**dadurch gekennzeichnet, dass** das Verschlusselement (8) einen Anschlag umfasst.

5. Boxkonstruktion (1) nach Anspruch 4,
**dadurch gekennzeichnet, dass** die Verbindung (4) ein biegsames Dämpfungselement (16) umfasst, welches mit dem Anschlag zusammenwirkt.

6. Boxkonstruktion (1) nach Anspruch 5,
**dadurch gekennzeichnet, dass** der Tragabschnitt (6) das biegsame Dämpfungselement (16) wenigstens teilweise umgibt und klemmt.

7. Boxkonstruktion (1) nach einem der vorhergehenden Ansprüche,
**dadurch gekennzeichnet, dass** der Trennelementabschnitt (7) als ein einstückiger Schmiede- oder Gussmetallabschnitt gestaltet ist.

8. Boxkonstruktion (1) nach einem der vorhergehenden Ansprüche 3 bis 6 oder 7, wenn abhängig von einem der Ansprüche 3 bis 6,
**dadurch gekennzeichnet, dass** das Verschlusselement (8) ein schlitzförmiges Loch (20) umfasst, wobei das schlitzförmige Loch (20) die Verschlusselementachse (15) umgibt.

9. Boxkonstruktion (1) nach Anspruch 8,
**dadurch gekennzeichnet, dass** das Verschlusselement (8) entlang der Verschlusselementachse (15) in eine Position verschiebbar ist, in welcher eine Drehung um die Verschlusselementachse (15) verhindert oder eingeschränkt ist.

## Revendications

1. Construction de stalle pour former une séparation d'un emplacement pour animaux, comprenant un élément de séparation (2, 3) s'étendant dans la direction longitudinale d'un emplacement pour animaux et un couplage (4) pour fixer l'élément de séparation (2, 3) à un support (5), lequel couplage (4) comprend une partie de support (6) destinée à être fixée au support (5) et une partie d'élément de séparation (7) destinée à être fixée à l'élément de séparation (2, 3) et l'élément de séparation (2, 3) étant mobile en hauteur par rotation autour d'un axe de rotation, dans laquelle le couplage (4) comprend un élément de fermeture (8) pour rendre la partie d'élément de séparation (7) détachable de la partie de support (6) par un mouvement de la partie d'élément de séparation (7) perpendiculaire à l'axe de rotation, **caractérisée en ce que** la partie de support (6) comprend un soutien (18) pour fixer la partie de support (6) sur le support (5), le soutien (18) comprenant l'axe de rotation, et **en ce que** la partie d'élément de séparation (7) comprend un espace de rotation (19) pour entourer l'axe de rotation, lequel espace de rotation (19) comprend une ouverture sur son côté inférieur.

2. Construction de stalle (1) selon la revendication 1, **caractérisée en ce que** la partie d'élément de séparation (7) comprend une butée pour limiter le mouvement en hauteur de l'élément de séparation (2, 3).

3. Construction de stalle (1) selon la revendication 1 ou 2, **caractérisée en ce que** l'élément de fermeture (8) est mobile autour d'un axe d'un élément de fermeture (15) perpendiculaire à l'axe de rotation.

4. Construction de stalle (1) selon la revendication 2 ou 3 lorsqu'elle dépend de la revendication 2, **caractérisée en ce que** l'élément de fermeture (8) comprend la butée.

5. Construction de stalle (1) selon la revendication 4, **caractérisée en ce que** le couplage (4) comprend un élément amortisseur flexible (16) qui coopère avec la butée.

6. Construction de stalle (1) selon la revendication 5, **caractérisée en ce que** la partie de support (6) entoure et serre l'élément amortisseur flexible (16) au moins partiellement.

7. Construction de stalle (1) selon une quelconque des revendications précédentes, **caractérisée en ce que** la partie d'élément de séparation (7) est constituée par une partie métallique forgée ou moulée unique.

8. Construction de stalle (1) selon une quelconque des revendications précédentes 3 à 6 ou 7 lorsqu'elle dépend de l'une quelconque des revendications 3 à 6, **caractérisée en ce que** l'élément de fermeture (8) comprend un orifice rainuré (20), lequel orifice rainuré (20) entoure l'axe de l'élément de fermeture (15).

9. Construction de stalle (1) selon la revendication 8, **caractérisée en ce que** l'élément de fermeture (8) peut être déplacé le long de l'axe de l'élément de fermeture (15) dans une position dans laquelle la rotation autour de l'axe de l'élément de fermeture (15) est empêchée ou limitée.
